# EUROPEAN PATENT SPECIFICATION

(11) **EP 2 172 661 B1**
(45) Date of publication and mention of the grant of the patent: **12.12.2012**
(21) Application number: 09252352.1
(22) Date of filing: 02.10.2009
(51) Int. Cl.: F16B 35/00, F16B 35/06, F16B 37/00

(54) **Wheel bolts**
Radbolzen
Boulons de roue

(30) Priority: 02.10.2008 TW 97217675 U
(43) Date of publication of application: 07.04.2010
(73) Proprietor: Hui, David, Taipei (105) (TW)
(72) Inventor: Hui, David, Taipei (105) (TW)
(74) Representative: Stoner, Gerard Patrick

(56) References cited:
- GB-A- 625 345
- US-A- 1 450 583
- US-A- 4 295 767

## Description

The present invention relates to a wheel bolt selectively fixed with aluminum head.

A conventional steel wheel bolt includes a head portion integrally formed on an outer end portion of a bolt for securing a vehicle wheel on a hub.

However, such a steel wheel bolt has the following drawbacks:
1. The whole piece of bolt including its head portion is made of iron or steel. It is heavy and easily oxidized to be rusty.
2. The steel bolt generally lacks of colorful decoration. In consideration of coloring of the head portion of the wheel bolt for decoration purpose, it may increase the processing complexity and cost when compared with the low-cost coloring for aluminum.
3. When it is intended to change the decorative feature of the bolt by a user's individual favorite or interest, the complete piece of bolt must be replaced with a new one, thereby causing waste.
4. The whole steel bolt is always plated with zinc, chrome or heavy metals to be harmful to environmental protection.

According to the present invention there is provided a wheel bolt comprising:
a stud made of e.g. steel or titanium alloy and having a first male-threaded portion formed on a first end portion of the stud, and having a second male-threaded portion formed on a second end portion of the stud to be secured to a vehicle hub; and
a head member made of aluminum or aluminum alloy having a female-threaded hole formed in the head member to engage with the first male-threaded portion of the stud.

Upon a selection of an aluminum head member to be fixed on the stud, a light, decorative and corrosion-resistant wheel bolt is obtained. The use of the present bolts as wheel bolts is an aspect of the invention.

The present invention will be further described with reference to the accompanying drawings, in which:
Fig. 1 is an illustration showing a head member and a stud for forming a wheel bolt in accordance with the present invention;
Fig. 2 is a sectional drawing when assembling the head member with the stud, as fastened by a retaining member, to form the wheel bolt of the present invention;
Fig. 3 is an illustration showing the fixing of a vehicle wheel on a hub by means of the wheel bolt of the present invention;
Fig. 4 shows a polygonal head member for use in the present invention; and
Fig. 5 shows another polygonal head member for used in the present invention.

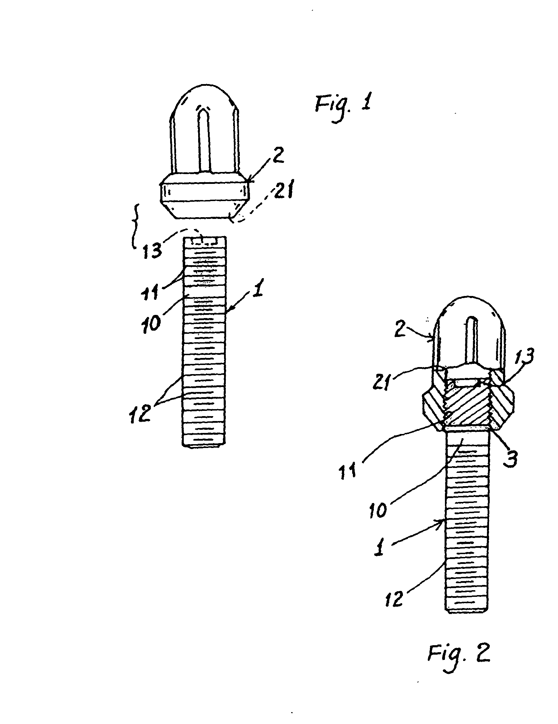

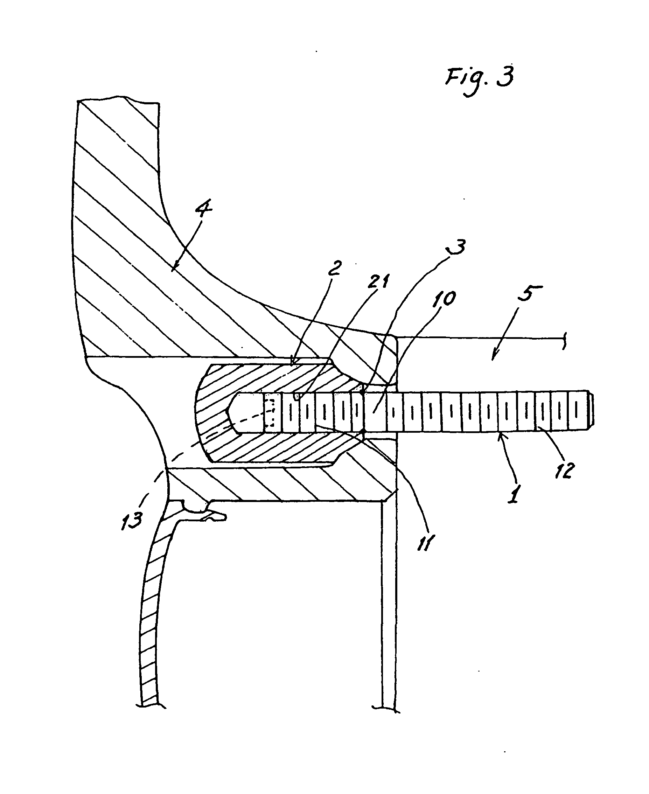

As shown in Figs. 1, 2 and 3, a wheel bolt embodying the present invention comprises: a stud 1; an aluminum head member 2 selectively fixed on an outer portion of the stud 1; and a retaining member 3 retained in between the head member 2 and the stud 1 for firmly fastening the head member 2 with the stud 1 for securing a vehicle wheel 4 on a hub 5.

The stud 1 may be made of iron, steel, titanium alloy or other metals or alloys, having a proper strength and durability to be suitable for serving as a wheel bolt.

The stud 1 includes: a first male-threaded portion 11 formed on a first end portion of the stud 1; a second male-threaded portion 12 formed on a second end portion of the stud 1. In this embodiment it has also a non-threaded portion 10 partitioned between the first and second male-threaded portions 11, 12. A polygonal socket 13 is recessed in an outer end portion of the first male-threaded portion 11 of the stud, as a drivable formation adapted to be engaged and driven by a spanner (not shown).

The aluminum head member 2, being made of aluminum or aluminum alloy, may be easily anodized and colored for decorative purpose.

The aluminum head member 2 includes a female-threaded hole 21 formed in the head member 2 to be engaged with the first male-threaded portion 11 of the stud 1 for fixing the head member 2 to the stud 1 to form a complete wheel bolt. As is conventional, it has a forwardly-directed conical surface to engage the wheel

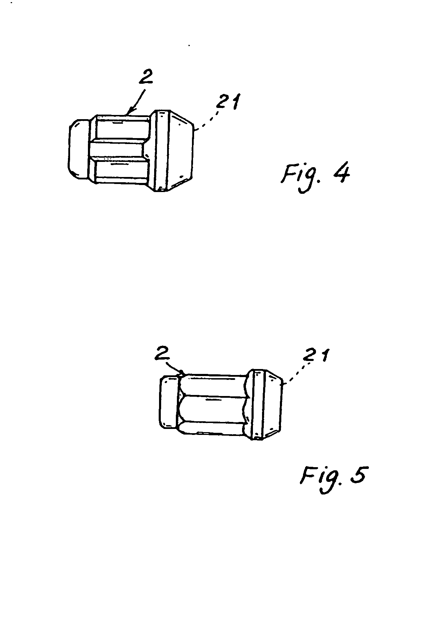

The head member 2 may be formed with a plurality of designs, patterns, shapes, colors, functional devices, optical or LED decorations. It may be formed as a specially-shaped "security nut" for anti-theft purpose. For instance, a polygonal head member as shown in Fig. 4 is different in shape from that as shown in Fig. 5. In general it has an external shape feature enabling drive in rotation by a corresponding spanner or wrench, as is conventional.

The head member 2, after being fixed to the stud 1, will form a complete wheel bolt for securing a wheel 4 to a hub 5. Or, the stud 1 may be first secured to the hub 5 and then the head member 2 (serving as a "nut") is provided for retaining the wheel 4 onto the hub 5.

The retaining member 3 may be a retaining ring made of elastomer (including rubber) to be inserted or retained in an annular aperture or recess in between the first male-threaded portion 11 of the stud 1 and the female-threaded hole 21 of the head member 2, adjacent to the non-threaded portion 10 of the stud 1.

The retaining member 3 may also include an adhesive provided in between the male-threaded portion 11 of the stud 1 and the female-threaded hole 21 of the head member 2 for firmly bonding the head member 2 with the stud 1.

When dismantling the wheel bolt from the hub of a vehicle for maintenance and when the head member 2 is accidentally uncoupled from the stud 1, the polygonal socket 13 (for example, a hexagonal socket 13) as recessed in an end portion of the first male-threaded portion 11 may be engaged with a spanner for reversibly rotating the stud 1 so as to dismantle the stud 1 from the hub 5.

The present invention discloses a wheel bolt, which is substantially constituted by "two pieces", namely, the head member 2 with the stud 1, having the following advantages superior to the conventional wheel bolt, the so-called "one-piece" steel wheel bolt having its head portion integrally formed on the bolt body:
1. The head member 2 is made of aluminum for easy anodizing and coloring for well decoration of a wheel bolt. So, the head members 2 with diversified designs, patterns, structures or functions may be selectively fixed to the stud (1) for favorite choices by the user. Just by replacing a head member (2), the decorative bolt feature may be changed, without replacing the complete bolt.
2. The aluminum head member 2 is lighter than iron or steel, while the stud 1 is made of strong steel or alloy without reducing the strength of the wheel bolt. So, total weight of each wheel bolt is reduced for more convenient handling and maintenance.
3. The aluminum head member 2, even exposed to environmental moisture or weather, may have better corrosion or weather resistance than that of the prior art. So, this invention provides an environmentally friendly "green" wheel bolt.
4. Aluminum is more heat conductive than iron or steel, so the aluminum head member 2 may help dissipate partial heat produced by a running tyre or vehicle wheel outwardly, being beneficial for driving safety.
5. The head members 2 and the studs 1 may be separately produced, stored and handled for enhancing the flexibility of production and inventory control and management.

## Claims

1. A wheel bolt comprising:
a stud (1) having a first male-threaded portion (11) formed on a first end portion of the stud (1), and a second male-threaded portion (12) formed on a second end portion of the stud (1) to be engaged in a vehicle hub; and
an aluminum head member (2) having a female-threaded hole (21) formed in said head member (2) and engaged with said first male-threaded portion (11) of said stud (1) to form a wheel bolt for securing a vehicle wheel to the vehicle hub,
**characterised by** an adhesive, provided as a retaining member between said first male-threaded portion (11) of said stud (1) and said female-threaded hole (21) of said head member (2) for firmly bonding said head member (2) with said stud (1).

2. A wheel bolt according to Claim 1 wherein said stud (1) includes a polygonal socket (13) recessed in an outer end portion of said first male-threaded portion (11) of said stud (1), adapted to be engaged with and driven by a spanner.

3. A wheel bolt according to claim 1 or claim 2 wherein said head member (2) includes at least a design, a pattern, a decoration or a functional device formed thereon.

## Patentansprüche

1. Radbolzen, der Folgendes aufweist:
eine Stiftschraube (1) mit einem ersten Außengewindebereich (11), der an einem ersten Endbereich der Stiftschraube (1) ausgebildet ist, und einem zweiten Außengewindebereich (12), der an einem zweiten Endbereich der Stiftschraube (1) ausgebildet ist, um mit einer Fahrzeugnabe in Eingriff gebracht zu werden, und
ein Aluminiumkopfelement (2), das ein Innengewindeloch (21) aufweist, das in dem Kopfelement (2) ausgebildet ist, und das mit dem ersten Außengewindebereich (11) der Stiftschraube (1) in Eingriff ist, wodurch ein Radbolzen zur Befestigung eines Fahrzeugrades an der Fahrzeugnabe gebildet wird,
**gekennzeichnet durch** einen Klebstoff, der als Halteelement zwischen dem ersten Au ßengewindebereich (11) der Stiftschraube (1) und dem Innengewindeloch (21) des Kopfelements (2) vorgesehen ist, um das Kopfelement (2) und die Stiftschraube (1) fest miteinander zu verbinden.

2. Radbolzen nach Anspruch 1, bei dem die Stiftschraube (1) eine polygonale Fassung (13) aufweist, die in einem äußeren Endbereich des ersten Au ßengewindebereichs (11) der Stiftschraube (1) ausgespart ist, und die dazu verwendbar ist, mit einem Schraubenschlüssel in Eingriff gebracht und betätigt zu werden.

3. Radbolzen nach Anspruch 1 oder Anspruch 2, bei dem das Kopfelement (2) mindestens ein Design, ein Muster, eine Dekoration oder eine Funktionsvorrichtung aufweist, das bzw. die auf diesem ausgebildet ist.

## Revendications

1. Boulon de roue, comprenant :
un goujon (1) comportant une première partie à filetage mâle (11) formée sur une première partie d'extrémité du goujon (1), et une deuxième partie à filetage mâle (12) formée sur une deuxième partie d'extrémité du goujon (1) de façon à venir en prise dans un moyeu de véhicule ; et
un élément de tête en aluminium (2) comportant un trou à filetage femelle (21) formé dans ledit élément de tête (2) et venant en prise avec ladite première partie à filetage mâle (11) dudit goujon (1) de façon à former un boulon de roue pour fixer une roue de véhicule au moyeu de véhicule,
**caractérisé par** un adhésif, disposé comme élément de maintien entre ladite première partie à filetage mâle (11) dudit goujon (1) et ledit trou à filetage femelle (21) dudit élément de tête (2) afin de fixer fermement ledit élément de tête (2) audit goujon (1).

2. Boulon de roue selon la revendication 1, dans lequel ledit goujon (1) comprend une douille polygonale (13) en cavité dans une partie d'extrémité extérieure de ladite première partie à filetage mâle (11) dudit goujon (1), adaptée de façon à venir en prise avec une clef et à être entraînée par celle-ci.

3. Boulon de roue selon la revendication 1 ou la revendication 2, dans lequel ledit élément de tête (2) comprend au moins un dessin, un motif, une décoration ou un dispositif fonctionnel formé sur celui-ci.
